(19) Europäisches Patentamt
European Patent Office
Office européen des brevets

(11) **EP 4 258 003 A1**

(12) **EUROPEAN PATENT APPLICATION**
published in accordance with Art. 153(4) EPC

(43) Date of publication:
**11.10.2023 Bulletin 2023/41**

(21) Application number: **21905229.7**

(22) Date of filing: **30.09.2021**

(51) International Patent Classification (IPC):
**G01S 3/46** (2006.01)

(52) Cooperative Patent Classification (CPC):
**G01S 3/46**

(86) International application number:
**PCT/CN2021/122262**

(87) International publication number:
**WO 2022/127300 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020 CN 202011514786**

(71) Applicant: **GUANGDONG OPPO MOBILE
TELECOMMUNICATIONS
CORP., LTD.
Dongguan, Guangdong 523860 (CN)**

(72) Inventor: **LI, Si
Dongguan, Guangdong 523860 (CN)**

(74) Representative: **Mewburn Ellis LLP
Aurora Building
Counterslip
Bristol BS1 6BX (GB)**

(54) **METHOD FOR DETERMINING ANGLE OF ARRIVAL, AND RELATED PRODUCT THEREOF**

(57)     A method and an apparatus for determining an angle-of-arrival (AOA), a storage medium, an electronic device, and a communication system are provided. The method includes the following. Acquire (101) a first phase difference between an electromagnetic wave signal received by the first antenna from a transmitting apparatus and the electromagnetic wave signal received by the second antenna from the transmitting apparatus when the electronic device is in a first posture. Acquire (102) a target angle variation, where the target angle variation is an angle variation of the electronic device in a second posture relative to the electronic device in the first posture. Acquire (103) a second phase difference between the electromagnetic wave signal received by the first antenna and the electromagnetic wave signal received by the second antenna when the electronic device is in the second posture. Determine (104), according to the target angle variation, the first phase difference, and the second phase difference, an AOA of the electromagnetic wave signal received when the electronic device is in the first posture. The method reduces the number (quantity) of antennas required in the electronic device.

| |
|---|
| ACQUIRE A FIRST PHASE DIFFERENCE BETWEEN AN ELECTROMAGNETIC WAVE SIGNAL RECEIVED BY THE FIRST ANTENNA FROM A TRANSMITTING APPARATUS AND THE ELECTROMAGNETIC WAVE SIGNAL RECEIVED BY THE SECOND ANTENNA FROM THE TRANSMITTING APPARATUS WHEN THE ELECTRONIC DEVICE IS IN A FIRST POSTURE — 101 |
| ACQUIRE A TARGET ANGLE VARIATION, WHERE THE TARGET ANGLE VARIATION IS AN ANGLE VARIATION OF THE ELECTRONIC DEVICE IN A SECOND POSTURE RELATIVE TO THE ELECTRONIC DEVICE IN THE FIRST POSTURE — 102 |
| ACQUIRE A SECOND PHASE DIFFERENCE BETWEEN THE ELECTROMAGNETIC WAVE SIGNAL RECEIVED BY THE FIRST ANTENNA AND THE ELECTROMAGNETIC WAVE SIGNAL RECEIVED BY THE SECOND ANTENNA WHEN THE ELECTRONIC DEVICE IS IN THE SECOND POSTURE — 103 |
| DETERMINE, ACCORDING TO THE TARGET ANGLE VARIATION, THE FIRST PHASE DIFFERENCE, AND THE SECOND PHASE DIFFERENCE, AN AOA OF THE ELECTROMAGNETIC WAVE SIGNAL RECEIVED WHEN THE ELECTRONIC DEVICE IS IN THE FIRST POSTURE — 104 |

**FIG. 1**

EP 4 258 003 A1

**Description**

TECHNICAL FIELD

The disclosure relates to the field of electronic technologies, and in particular, to a method and an apparatus for determining an angle-of-arrival (AOA), a storage medium, an electronic device, and a communication system.

BACKGROUND

A method for determining an angle-of-arrival (AOA) can be used to locate electronic devices. In the relevant art, at least three antennas need to be arranged in a certain form to determine an AOA. The method for determining an AOA involves the use of a relatively large number of antennas, which increases the difficulty in arranging antennas inside the electronic device. In addition, the configuration of multiple antennas imposes relatively high spatial requirements on the electronic device.

SUMMARY

A method, an apparatus, a storage medium, an electronic device, and a communication system are provided in the disclosure, which can determine an angle-of-arrival (AOA) with a relatively small number (quantity) of antennas.

In a first aspect, a method for determining an AOA is provided in the disclosure. The method is applied to an electronic device including a first antenna and a second antenna. The method includes the following. Acquire a first phase difference between an electromagnetic wave signal received by the first antenna from a transmitting apparatus and the electromagnetic wave signal received by the second antenna from the transmitting apparatus when the electronic device is in a first posture. Acquire a target angle variation, where the target angle variation is an angle variation of the electronic device in a second posture relative to the electronic device in the first posture. Acquire a second phase difference between the electromagnetic wave signal received by the first antenna and the electromagnetic wave signal received by the second antenna when the electronic device is in the second posture. Determine an AOA of the electromagnetic wave signal received when the electronic device is in the first posture according to the target angle variation, the first phase difference, and the second phase difference.

In a second aspect, an apparatus for determining an AOA is further provided in the disclosure. The apparatus includes a first acquiring unit, a posture detector, a second acquiring unit, and a processing unit. The first acquiring unit is configured to acquire a first phase difference between an electromagnetic wave signal received by a first antenna from a transmitting apparatus and the electromagnetic wave signal received by a second antenna from the transmitting apparatus when an electronic device is in a first posture. The posture detector is configured to acquire a target angle variation, where the target angle variation is an angle variation of the electronic device in a second posture relative to the electronic device in the first posture. The second acquiring unit is configured to acquire a second phase difference between the electromagnetic wave signal received by the first antenna and the electromagnetic wave signal received by the second antenna when the electronic device is in the second posture. The processing unit is configured to determine, according to the target angle variation, the first phase difference, and the second phase difference, an AOA of the electromagnetic wave signal received when the electronic device is in the first posture.

In a third aspect, a storage medium is further provided in the disclosure. The storage medium stores a computer program which, when executed by a processor, causes the processor to carry out the method for determining an AOA.

In a fourth aspect, an electronic device is further provided in the disclosure. The electronic device includes a processor, a memory, and one or more programs stored in the memory and configured to be executed by the processor, where the one or more programs include instructions for executing the method for determining an AOA.

In a fifth aspect, a communication system is further provided in the disclosure. The communication system includes the electronic device provided in the fourth aspect and a transmitting apparatus, where the transmitting apparatus is configured to transmit an electromagnetic wave signal to the first antenna and the second antenna.

The first phase difference between the electromagnetic wave signal received by the first antenna and the electromagnetic wave signal received by the second antenna when the electronic device is in the first posture is acquired. In the case that a posture of the electronic device is changed, the target angle variation of the electronic device when the electronic device moves from the first posture to the second posture is acquired, and the second phase difference between the electromagnetic wave signal received by the first antenna and the electromagnetic wave signal received by the second antenna when the electronic device is in the first posture is acquired. And then, the AOA of the electromagnetic wave signal is determined according to the target angle variation, the first phase difference, and the second phase difference, so that a position and an orientation of the electronic device relative to the transmitting apparatus can be determined, thereby positioning the electronic device. In addition, according to the method, it only needs to configure the first antenna and the second antenna, a relatively small number of antennas are involved, and it is beneficial to reducing the spatial requirements and assembly difficulty for the electronic device.

BRIEF DESCRIPTION OF THE DRAWINGS

To describe the technical solutions in implementations of the disclosure more clearly, the following briefly introduces the accompanying drawings required for describing the implementations.

FIG. 1 is a schematic flow chart of a method for determining an angle-of-arrival (AOA) provided in an implementation of the disclosure.
FIG. 2 is a schematic plan diagram of an electronic device performing the method for determining an AOA as illustrated in FIG. 1.
FIG. 3 is another schematic plan diagram of an electronic device performing the method for determining an AOA as illustrated in FIG. 1.
FIG. 4 is a schematic flow chart of an operation at 101 in the method for determining an AOA as illustrated in FIG. 1.
FIG. 5 is a schematic flow chart of an operation at 102 in the method for determining an AOA illustrated in FIG. 1.
FIG. 6 is a schematic diagram illustrating that in the method for determining an AOA illustrated in FIG. 1, a second posture includes a first sub-posture and a second sub-posture.
FIG. 7 is a schematic flow chart of an operation at 103 in the method for determining an AOA illustrated in FIG. 1.
FIG. 8 is a schematic flow chart of an operation at 104 in the method for determining an AOA illustrated in FIG. 1.
FIG. 9 is a schematic flow chart of an operation at 140 in the method for determining an AOA illustrated in FIG. 8.
FIG. 10 is a schematic flow chart of an operation at 141 in the method for determining an AOA illustrated in FIG. 8.
FIG 11 is a schematic flow chart of a method for determining an AOA provided in a second implementation of the disclosure.
FIG. 12 is a schematic diagram of an apparatus for determining an AOA provided in an implementation of the disclosure.
FIG. 13 is a schematic structural diagram of an electronic system provided in an implementation of the disclosure.
FIG. 14 is a schematic structural diagram of an electronic device in the electronic system illustrated in FIG. 13.
FIG. 15 is a schematic structural diagram illustrating that in the electronic device illustrated in FIG. 14, a first antenna and a second antenna are disposed at a circuit board.
FIG. 16 is a schematic structural diagram illustrating that in the electronic device illustrated in FIG. 14, a first antenna and a second antenna are received in a housing.

DETAILED DESCRIPTION

The following clearly and completely describes the technical solutions in the implementations of the disclosure with reference to the accompanying drawings in the implementations of the disclosure.

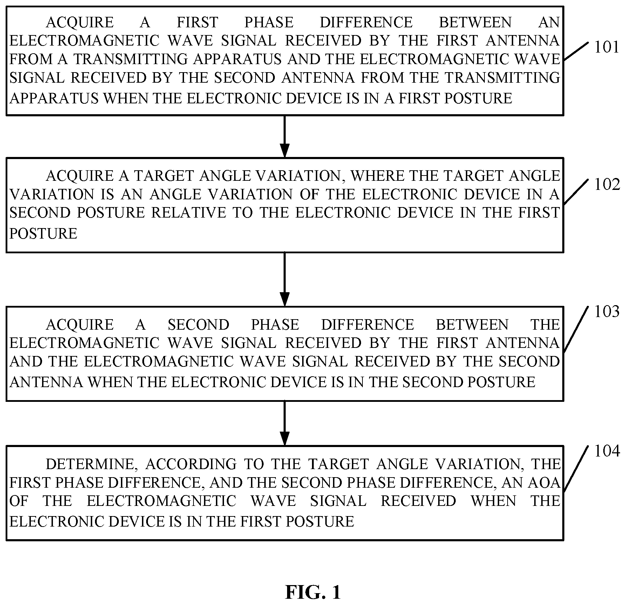

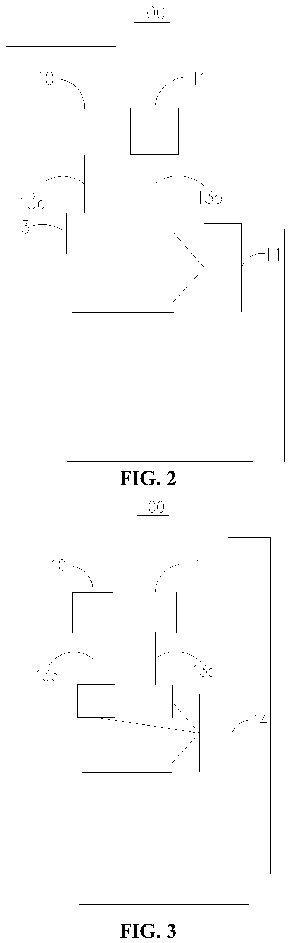

As illustrated in FIG. 1, FIG. 1 is a schematic flow chart of a method for determining an angle-of-arrival (AOA) provided in a first implementation of the disclosure. The method for determining an AOA provided in the first implementation of the disclosure can be applied to the positioning of an electronic device 100. Referring to FIGs. 2 and 3, the electronic device 100 includes a first antenna 10 and a second antenna 11. The first antenna 10 is spaced apart from the second antenna 11. The method for determining an AOA provided in the first implementation of the disclosure includes at least operations at 101, 102, 103, and 104.

At 101: acquire a first phase difference between an electromagnetic wave signal received by the first antenna from a transmitting apparatus and the electromagnetic wave signal received by the second antenna from the transmitting apparatus when the electronic device is in a first posture.

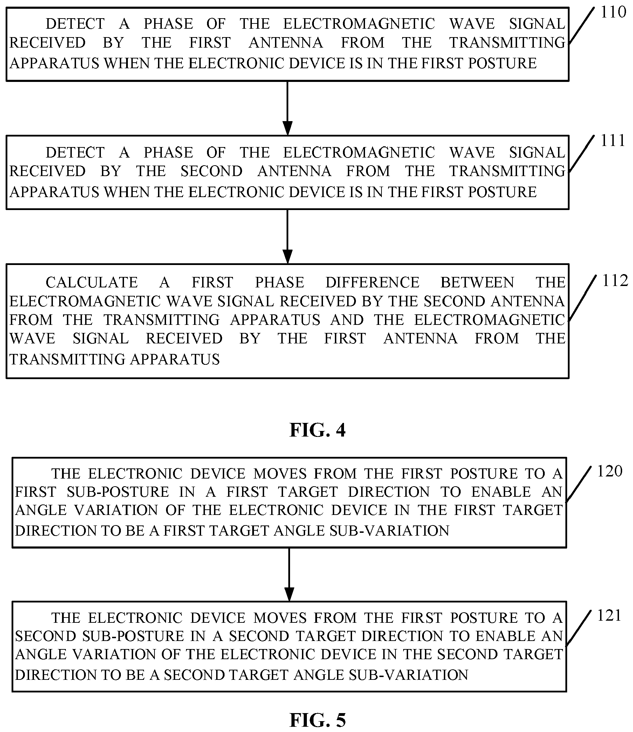

Specifically, as illustrated in FIG. 4, the operation at 101 includes an operation at 110, an operation at 111, and an operation at 112.

At 110: detect a phase of the electromagnetic wave signal received by the first antenna from the transmitting apparatus when the electronic device is in the first posture.

As illustrated in FIG. 2, the electronic device 100 further includes a detection assembly 13. The detection assembly 13 includes a first detection circuit 13a. The first detection circuit 13a has one end electrically connected with the first antenna 10 and the other end connected with a main control circuit 14. The first detection circuit 13a is configured to detect the phase of the electromagnetic wave signal received by the first antenna 10 when the electronic device 100 is in the first posture, and to transmit the detected phase of the electromagnetic wave signal to the main control circuit 14. The first antenna 10 may be a receiving antenna, and may also be a transceiving antenna. In other words, the first antenna 10 may be configured to only receive an electromagnetic wave signal transmitted by the transmitting apparatus, or the first antenna 10 is configured to not only receive an electromagnetic wave signal transmitted by the transmitting apparatus, but also transmit an electromagnetic wave signal to the transmitting apparatus, inside the electronic device 100, or an external apparatus of the electronic device 100. The electromagnetic wave signal received by the first antenna 10 from the transmitting apparatus is a wireless signal. The first posture may be a current posture of the electronic device 100, and may also be a preset posture.

At 111: detect a phase of the electromagnetic wave signal received by the second antenna from the transmitting apparatus when the electronic device is in the first posture.

Further, as illustrated in FIG. 2, the detection assembly 13 further includes a second detection circuit 13b. Referring to FIG. 2 and FIG. 3, the second detection circuit 13b may be independent of or electrically connected with the first detection circuit 13a. The second detection circuit 13b has one end electrically connected with the second antenna 11 and the other end connected with the main control circuit 14. The second detection circuit 13b is configured to detect the phase of the electromagnetic wave signal received by the second antenna 11 when the electronic device 100 is in the first posture, and to transmit the detected phase of the electromagnetic wave signal to the main control circuit 14. The second antenna 11 may be a receiving antenna, and may also be a transceiving antenna. In other words, the second antenna 11 may be configured to only receive an electromagnetic wave signal transmitted by the transmitting apparatus, or the second antenna 11 may be configured to not only receive an electromagnetic wave signal transmitted by the transmitting apparatus, but also transmit an electromagnetic wave signal to the transmitting apparatus inside the electronic device 100, or an external apparatus of the electronic device 100. A structure of the second antenna 11 may be the same as or different from that of the first antenna 10. Optionally, in the electronic device 100, an orientation of the second antenna 11 is the same as an orientation of the first antenna 10. The electromagnetic wave signal received by the second antenna 11 from the transmitting apparatus is a wireless signal.

At 112: calculate a first phase difference between the electromagnetic wave signal received by the second antenna from the transmitting apparatus and the electromagnetic wave signal received by the first antenna from the transmitting apparatus.

It can be understood that the first phase difference is a difference between the phase of the electromagnetic wave signal received by the second antenna 11 from the transmitting apparatus and the phase of the electromagnetic wave signal received by the first antenna 10 from the transmitting apparatus when the electronic device 100 is in the first posture. The first phase difference may be expressed as follows:

$$PD_1 = PH_{12} - PH_{11}$$

where $PD_1$ represents the first phase difference, $PH_{11}$ represents the phase of the electromagnetic wave signal received by the first antenna 10 from the transmitting apparatus when the electronic device 100 is in the first posture, and $PH_{12}$ represents the phase of the electromagnetic wave signal received by the second antenna 11 from the transmitting apparatus when the electronic device 100 is in the first posture.

At 102: acquire a target angle variation, where the target angle variation is an angle variation of the electronic device in a second posture relative to the electronic device in the first posture.

It can be understood that the first posture is different from the second posture. When the electronic device 100 moves from the first posture to the second posture, a change in the AOA of the electromagnetic wave signal received by the electronic device 100 is relatively small. The target angle variation may be an angle vector with a specified direction and a specified size, or an angle vector a direction of which falls within a certain range and a size of which falls within a certain range. When the target angle variation is an angle vector a direction of which is a specified direction and a size of which falls within a certain range, a size of the target angle variation may be further measured by a posture detector, for example, a gyroscope sensor.

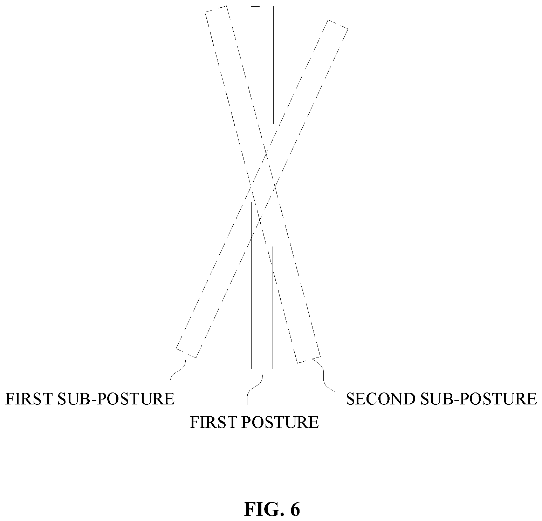

Referring to FIG. 5 and FIG. 6, the operation at 102 includes an operation at 120 and an operation 121.

At 120: the electronic device moves from the first posture to a first sub-posture in a first target direction to enable an angle variation of the electronic device in the first target direction to be a first target angle sub-variation.

The electronic device moves from the first posture to the first sub-posture may be that the electronic device rotates from the first posture to the first sub-posture.

At 121: the electronic device moves from the first posture to a second sub-posture in a second target direction to enable an angle variation of the electronic device in the second target direction to be a second target angle sub-variation.

The electronic device moves from the first posture to the second sub-posture may be that the electronic device rotates from the first posture to the second sub-posture.

The first target direction is perpendicular to the second target direction. The second posture includes the first sub-posture and the second sub-posture. In other words, the first sub-posture is a component of the second posture in the first target direction and the second sub-posture is a component of the second posture in the second target direction, and the first target angle sub-variation and the second target angle sub-variation form the target angle variation.

Specifically, the AOA of the electromagnetic wave signal received when the electronic device is in the first posture includes an azimuth angle and a pitch angle. The first target angle sub-variation may be an angle variation in an azimuth direction, and the second target angle sub-variation may be an angle variation in a pitch direction. Alternatively, the first target angle sub-variation may be an angle variation in the pitch direction, and the second target angle sub-variation may be an angle variation in the pitch direction. In other words, the azimuth angle of the electromagnetic wave signal received when the electronic device 100 is in the first posture is different from the azimuth angle of the electromagnetic wave signal received when the electronic device 100 is in the first sub-posture; or the pitch angle of the electromagnetic wave signal received when the electronic device 100 is in the first posture is different from the pitch angle of the electromagnetic wave signal received when the electronic device 100 is in the first sub-posture. That is, the first target direction may be one of the azimuth direction and the pitch direction, and the second target direction may be the other one of the azimuth direction and the pitch direction.

At 120, the electronic device 100 moves from the first posture to the first sub-posture. At 121, the electronic device 100 moves from the first posture to the second sub-posture. In an implementation, when the electronic device 100 moves from the first posture to the first sub-posture, the azimuth angle of the electromagnetic wave signal received when the electronic device 100 is in the first posture is different from the azimuth angle of the electromagnetic wave signal received when the electronic device 100 is in the first sub-posture, and the pitch angle of the electromagnetic wave signal received when the electronic device 100 is in the first posture is the same as the pitch angle of the electromagnetic wave signal received when the electronic device 100 is in the first sub-posture. When the electronic device 100 moves from the first posture to the second sub-posture, the pitch angle of the electromagnetic wave signal received when the electronic device 100 is in the first posture is different from the pitch angle of the electromagnetic wave signal received when the electronic device 100 is in the second sub-posture, and the azimuth angle of the electromagnetic wave signal received when the electronic device 100 is in the first posture is the same as the azimuth angle of the electromagnetic wave signal received when the electronic device 100 is in the second sub-posture. The following operations are specifically described based on the implementation, and will not be described in detail. That is, for example, the first target direction is the azimuth direction and the second target direction is the pitch direction. It can be understood that, in other implementations, when the electronic device 100 moves from the first posture to the first sub-posture, the pitch angle of the electromagnetic wave signal received when the electronic device 100 is in the first posture is different from the pitch angle of the electromagnetic wave signal received when the electronic device 100 is in the first sub-posture, and the azimuth angle of the electromagnetic wave signal received when the electronic device 100 is in the first posture is the same as the azimuth angle of the electromagnetic wave signal received when the electronic device 100 is in the first sub-posture. When the electronic device 100 moves from the first posture to the second sub-posture, the azimuth angle of the electromagnetic wave signal received when the electronic device 100 is in the first posture is different from the azimuth angle of the electromagnetic wave signal received when the electronic device 100 is in the second sub-posture, and the pitch angle of the electromagnetic wave signal received when the electronic device 100 is in the first posture is the same as the pitch angle of the electromagnetic wave signal received when the electronic device 100 is in the second sub-posture.

When the electronic device device 100 is in the first sub-posture, the azimuth angle is $\theta$ and the pitch angle is $\varphi$. When the electronic device device 100 is in the first sub-posture, the azimuth angle is $\theta+\Delta\theta$ and the pitch angle is $\varphi$, and the first target angle sub-variation is $\Delta\theta$. When the electronic device 100 is in the second sub-posture, the azimuth angle is $\theta$ and the pitch angle is $\varphi+\Delta\varphi$, and the second target angle sub-variation is $\Delta\varphi$. Optionally, an absolute value $|\Delta\theta|$ of the first target angle sub-variation is greater than 0 degree and less than or equal to 5 degrees, and an absolute value $|\Delta\varphi|$ of the second target angle sub-variation is greater than 0 degree and less than or equal to 5 degrees.

At 103: acquire a second phase difference between the electromagnetic wave signal received by the first antenna and the electromagnetic wave signal received by the second antenna when the electronic device is in the second posture.

Specifically, the first detection circuit 13a is further configured to detect the phase of the electromagnetic wave signal received by the first antenna 10 when the electronic device 100 is in the second posture, and to transmit the detected phase of the electromagnetic wave signal to the main control circuit 14. The second detection circuit 13b is further configured to detect a phase of the electromagnetic wave signal received by the second antenna 11 when the electronic device 100 is in the second posture, and to transmit the detected phase of the electromagnetic wave signal to the main control circuit 14.

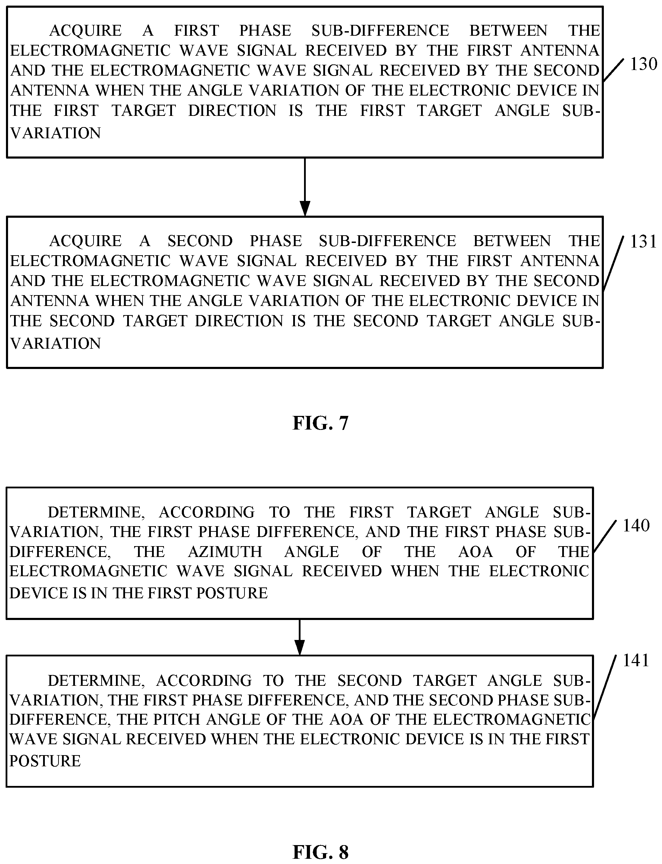

As illustrated in FIG. 7, the operation at 103 includes an operation at 130 and an operation at 131.

At 130: acquire a first phase sub-difference between the electromagnetic wave signal received by the first antenna and the electromagnetic wave signal received by the second antenna when the angle variation of the electronic device in the first target direction is the first target angle sub-variation.

In other words, when the electronic device 100 moves from the first posture to the first sub-posture, the first phase sub-difference between the electromagnetic wave signal received by the first antenna 10 and the electromagnetic wave signal received by the second antenna 11 is acquired.

It can be understood that first phase sub-difference is a difference between a phase of the electromagnetic wave signal received by the second antenna 11 from the transmitting apparatus and a phase of the electromagnetic wave signal received by the first antenna 10 from the transmitting apparatus when the electronic device 100 is in the first sub-posture. The first phase sub-difference may be expressed as follows:

$$PD_{21}=PH_{22}-PH_{21}$$

where $PD_{21}$ represents the first phase sub-difference, $PH_{21}$ represents the phase of the electromagnetic wave signal received by the first antenna 10 from the transmitting apparatus when the electronic device 100 is in the first sub-posture, and $PH_{21}$ represents the phase of the electromagnetic wave signal received by the second antenna 11 from the transmitting apparatus when the electronic device 100 is in the first sub-posture.

At 131: acquire a second phase sub-difference between the electromagnetic wave signal received by the first antenna and the electromagnetic wave signal received by the second antenna when the angle variation of the electronic device in the second target direction is the second target angle sub-variation.

In other words, when the electronic device 100 moves from the first posture to the second sub-posture, the second phase sub-difference between the electromagnetic wave signal received by the first antenna 10 and the electromagnetic wave signal received by the second antenna 11 is acquired.

It can be understood that second phase sub-difference is a difference between a phase of the electromagnetic wave signal received by the second antenna 11 from the transmitting apparatus and a phase of the electromagnetic wave signal received by the first antenna 10 from the transmitting apparatus when the electronic device 100 is in the second sub-posture. The first phase difference can be expressed as follows:

$$PD_{22}=PH_{32}-PH_{31}$$

where $PD_{22}$ represents the second phase sub-difference, $PH_{31}$ represents the phase of the electromagnetic wave signal received by the first antenna 10 from the transmitting apparatus when the electronic device 100 is in the second sub-posture, and $PH_{32}$ represents the phase of the electromagnetic wave signal received by the second antenna 11 from the transmitting apparatus when the electronic device 100 is in the second sub-posture.

The first phase sub-difference at 130 and the second phase sub-difference at 131 form the second phase difference. In other words, the second phase difference includes the first phase sub-difference and the second phase sub-difference.

At 104: determine, according to the target angle variation, the first phase difference, and the second phase difference, an AOA of the electromagnetic wave signal received when the electronic device is in the first posture.

The operation at 104 may be understood as that the AOA of the electromagnetic wave signal received when the electronic device 100 is in the first posture is determined according to the first target angle sub-variation, the second target angle sub-variation, the first phase difference, the first phase sub-difference, and the second phase sub-difference.

Specifically, as illustrated in FIG. 8, the operation at 104 includes an operation at 140 and an operation at141.

At 140: determine, according to the first target angle sub-variation, the first phase difference, and the first phase sub-difference, the azimuth angle of the AOA of the electromagnetic wave signal received when the electronic device is in the first posture.

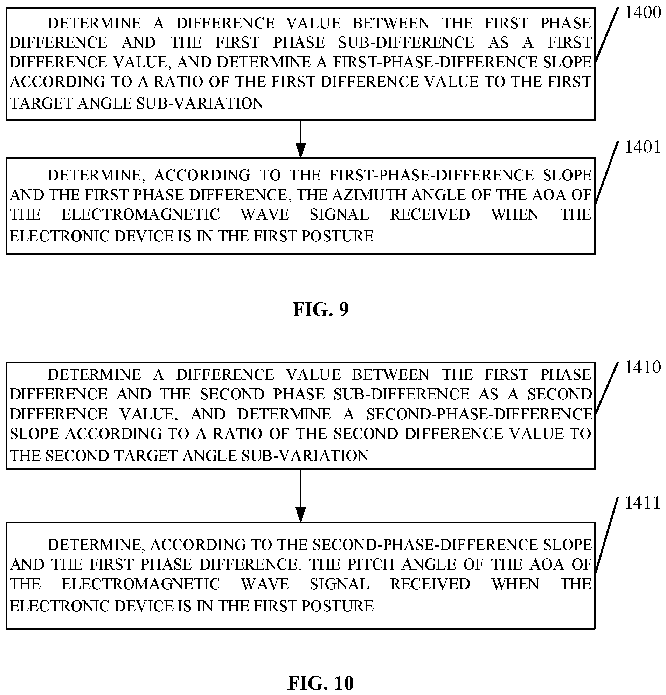

Specifically, as illustrated in FIG. 9, the operation at 140 includes an operation at 1400 and an operation at 1401.

At 1400: determine a difference value between the first phase difference and the first phase sub-difference as a first difference value, and determine a first-phase-difference slope according to a ratio of the first difference value to the first target angle sub-variation.

The first-phase-difference slope $PD_{1\text{-}K}$ may be expressed as follows:

$$PD_{1\text{-}K}=(PD_{21}-PD_{1})/\Delta\theta$$

where $PD_{21}$ represents the first phase sub-difference, $PD_{1}$ represents the first phase difference, and $\Delta\theta$ represents the first target angle sub-variation.

At 1401: determine, according to the first-phase-difference slope and the first phase difference, the azimuth angle of the AOA of the electromagnetic wave signal received when the electronic device is in the first posture. The azimuth angle may be expressed as follows:

$$\theta=\operatorname{atan}(PD_{1}/PD_{1\text{-}K})$$

where $\theta$ represents the azimuth angle of the AOA, $PD_{1}$ represents the first phase difference, and $PD_{1\text{-}K}$ represents the first-phase-difference slope.

At 141: determine, according to the second target angle sub-variation, the first phase difference, and the second phase sub-difference, the pitch angle of the AOA of the electromagnetic wave signal received when the electronic device is in the first posture.

Specifically, as illustrated in FIG. 10, an operation at 141 includes an operation at 1410 and an operation at 1411.

At 1410: determine a difference value between the first phase difference and the second phase sub-difference as a second difference value, and determine a second-phase-difference slope according to a ratio of the second difference value to the second target angle sub-variation.

The second-phase-difference slope $PD_{2\text{-}K}$ may be expressed as follows:

$$PD_{2\text{-}K} = (PD_{22} - PD_1)/\Delta\varphi$$

where $PD_{2\text{-}K}$ represents the second phase sub-difference, $PD_1$ represents the first phase difference, and $\Delta\varphi$ represents the second target angle sub-variation.

At 1411: determine, according to the second-phase-difference slope and the first phase difference, the pitch angle of the AOA of the electromagnetic wave signal received when the electronic device is in the first posture. The pitch angle may be expressed as follows:

$$\varphi = -\operatorname{atan}(PD_{2\text{-}K}/PD_1)$$

where $\varphi$ represents the pitch angle of the AOA, $PD_{2\text{-}K}$ represents the second-phase-difference slope, and $PD_1$ represents the first phase difference.

The first phase difference between the electromagnetic wave signal received by the first antenna 10 and the electromagnetic wave signal received by the second antenna 11 when the electronic device 100 is in the first posture is acquired. In the case that a posture of the electronic device 100 is changed, the target angle variation of the electronic device 100 when the electronic device 100 moves from the first posture to the second posture is acquired, and the second phase difference between the electromagnetic wave signal received by the first antenna 10 and the electromagnetic wave signal received by the second antenna 11 when the electronic device 100 is in the second posture is acquired. And then, the AOA of the electromagnetic wave signal is determined according to the target angle variation, the first phase difference, and the second phase difference, so that a position and an orientation of the electronic device 100 relative to the transmitting apparatus can be determined, thereby positioning the electronic device 100. In addition, according to the method, it only needs to configure the first antenna 10 and the second antenna 11, a relatively small number (quantity) of antennas are involved, and it is beneficial to reducing the spatial requirements and assembly difficulty for the electronic device 100.

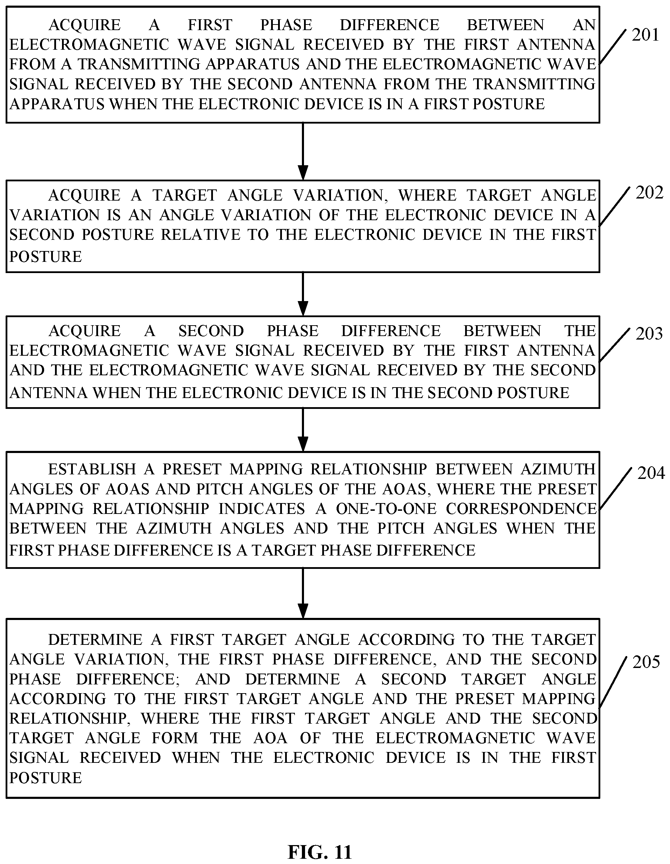

As illustrated in FIG. 11, FIG. 11 is a schematic flow chart of a method for determining an AOA provided in a second implementation of the disclosure. The method for determining an AOA provided in the second implementation of the disclosure at least includes the following:

At 201: acquire a first phase difference between an electromagnetic wave signal received by the first antenna from a transmitting apparatus and the electromagnetic wave signal received by the second antenna from the transmitting apparatus when the electronic device is in a first posture.

An operation at 201 is the same as the operation at 101 in the first implementation, and is not further described herein.

At 202: acquire a target angle variation, where target angle variation is an angle variation of the electronic device in a second posture relative to the electronic device in the first posture.

An operation at 202 is similar to the operation at 102 in the first implementation, except that the second posture at 202 includes the first sub-posture or the second sub-posture.

At 203: acquire a second phase difference between the electromagnetic wave signal received by the first antenna and the electromagnetic wave signal received by the second antenna when the electronic device is in the second posture.

An operation at 203 is similar to the operation at 103 in the first implementation, the operation at 203 differs from the operation at 103 in that when the second posture at 202 is the first sub-posture, the second phase difference is the first phase sub-difference; and when the second posture at 202 is the second sub-posture, the second phase difference is the second phase sub-difference.

At 204: establish a preset mapping relationship between azimuth angles of AOAs and pitch angles of the AOAs, where the preset mapping relationship indicates a one-to-one correspondence between the azimuth angles and the pitch angles when the first phase difference is a target phase difference.

Optionally, the preset mapping relationship between the azimuth angles of the AOAs and the pitch angles of the AOAs is established according to the method for determining an AOA provided in the first implementation. That is, the azimuth angle and the pitch angle are calculated according to the method in the first implementation when the first phase difference is the target phase difference. The target phase difference may be understood as the first phase difference of the electronic device 100 in a target posture in multiple postures.

Specifically, the preset mapping relationship is as follows.

|  | $\theta 1$ | $\theta 2$ | ...... | $\theta i$ |
|---|---|---|---|---|
| $\varphi 1$ | PD11 | PD12 | ...... | PD1i |
| $\varphi 2$ | PD21 | PD22 | ...... | PD2i |
| ...... | ...... | ...... | ...... | ...... |
| $\varphi i$ | PDi1 | PDi2 | ...... | PDii |

where $\varphi 1$, $\varphi 2$, ... , $\varphi i$ represent multiple pitch angles. $\theta 1$, $\theta 2$, ... , $\theta i$ represent multiple azimuth angles. PD11, PD12, ... , PD1i, PD21, PD22, ... , PD2i, ... , PDi1, PDi2, .. , PDii represent first phase differences. The target phase difference may be any one selected from PD11, PD12, ... , PD1i, PD21, PD22, ... , PD2i, ... , PDi1, PDi2, .. , PDii. Optionally, "i" is less than or equal to 100.

At 205: determine a first target angle according to the target angle variation, the first phase difference, and the second phase difference; and determine a second target angle according to the first target angle and the preset mapping relationship, where the first target angle and the second target angle form the AOA of the electromagnetic wave signal received when the electronic device is in the first posture.

The first target angle and the second target angle form the AOA of the electromagnetic wave signal received when the electronic device is in the first posture. The first target angle is the azimuth angle and the second target angle is the pitch angle; or the first target angle is the pitch angle and the second target angle is the azimuth angle.

Specifically, when the first target angle sub-variation is a variation in azimuth angle, the azimuth angle when the electronic device 100 is in the first posture is determined according to the first target angle sub-variation, the first phase difference, and the second phase difference. The pitch angle when the electronic device 100 is in the first posture is determined according to the azimuth angle and the preset mapping relationship, where the azimuth angle is one of $\theta 1, \theta 2, ... , \theta i$ of the preset mapping relationships.

When the first target angle sub-variation is a variation in pitch angle, the pitch angle when the electronic device 100 is in the first posture is determined according to the first target angle sub-variation, the first phase difference, and the second phase difference. The azimuth angle when the electronic device 100 is in the first posture is determined according to the pitch angle and the preset mapping relationship, where the pitch angle is one of $\varphi 1, \varphi 2, ... , \varphi i$.

In the implementation, the preset mapping relationship is determined before determining, according to the target angle variation, the first phase difference, and the second phase difference, the AOA of the electromagnetic wave signal received when electronic device 100 is in the first posture. As such, once one of the azimuth angle and the pitch angle of the AOA is determined, the other one of the azimuth angle and the pitch angle of the AOA may be determined according to the preset mapping relationship. When the preset mapping relationship is stored in the electronic device 100, the operations for determining the AOA by the electronic device 100 can be simplified, and a time taken by determining the AOA can be shortened.

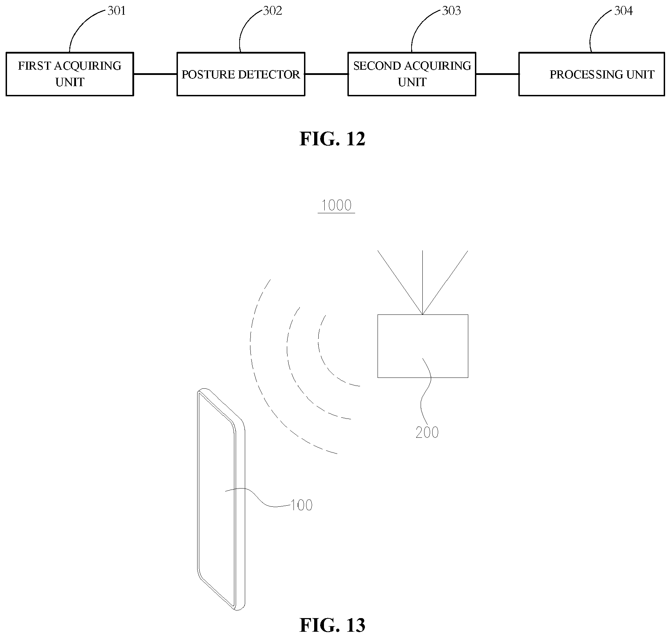

Further, as illustrated in FIG. 12, an apparatus for determining an angle-of-arrival (AOA) of an electromagnetic wave signal is further provided in the disclosure. The apparatus includes a first acquiring unit 301, a posture detector 302, a second acquiring unit 303, and a processing unit 304.

Referring to FIG. 2 and FIG. 12, the first acquiring unit 301 is configured to acquire a first phase difference between an electromagnetic wave signal received by the first antenna 10 from a transmitting apparatus and the electromagnetic wave signal received by the second antenna 11 from the transmitting apparatus when the electronic device 100 is in a first posture.

The posture detector 302 is configured to acquire a target angle variation, where the target angle variation is an angle variation of the electronic device 100 in a second posture relative to the electronic device 100 in the first posture.

The second acquiring unit 303 is configured to acquire a second phase difference between the electromagnetic wave signal received by the first antenna 10 and the electromagnetic wave signal received by the second antenna 11 when the electronic device 100 is in the second posture.

The processing unit 304 is configured to determine, according to the target angle variation, the first phase difference, and the second phase difference, an AOA of the electromagnetic wave signal received when the electronic device 100 is in the first posture.

Further, a storage medium is further provided in the disclosure. The storage medium stores a computer program which, when executed by a processor, causes the processor to carry out the method for determining an AOA in the first implementation or the method for determining an AOA in the second implementation.

The storage medium may be any medium that can store program codes, such as a USB flash disk, a removable hard disk, a magnetic disk, an optical disk, a read-only memory (ROM), or a random access memory (RAM).

In addition, as illustrated in FIG. 13, a communication system 1000 is further provided in the implementations of the disclosure. The communication system 1000 includes the electronic device 100 and the transmitting apparatus 200.

Optionally, the transmitting apparatus 200 may be a transmitting antenna, a Bluetooth module, or the like, and is configured to transmit an electromagnetic wave signal to the electronic device 100.

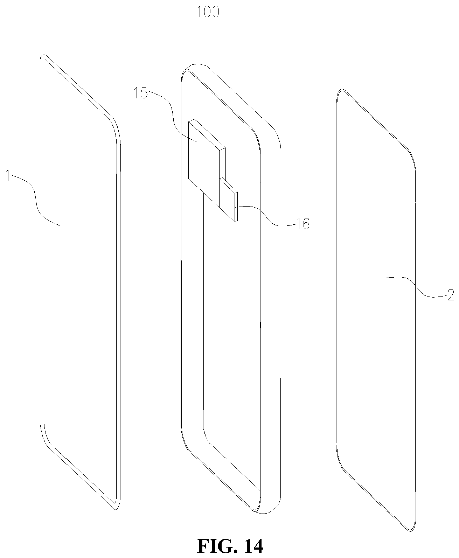

As illustrated in FIG. 14, the electronic device 100 may be a mobile phone, a tablet computer, a desktop computer, a laptop computer, a handheld computer, a laptop computer, a media player, a watch, a necklace, glasses, etc. The implementations of the disclosure are illustrated by taking a mobile phone as an example.

As illustrated in FIG. 14, the electronic device 100 includes a processor 15, a memory 16, and one or more programs stored in the memory 16 and configured to be executed by the processor 15, and the one or more programs include instructions for executing the method for determining an AOA in the first implementation or the method for determining an AOA in the second implementation.

The processor 15 may be a general central processing unit (CPU), a microprocessor, an application-specific integrated circuit (ASIC), or one or more integrated circuits for controlling the execution of programs in the foregoing solutions.

The memory 16 may be a read-only memory (ROM) or other type of static storage device that may store static information and instructions, random access memory (RAM), or other types of dynamic storage devices that can store information and instructions, and may also be an electrically erasable programmable read-only memory (EEPROM) or a compact disc read-only memory (CD-ROM), or other optical disk storages, optical disk storages (which may include compact disc, laser disc, optical disc, digital versatile disc, Blu-ray disc, etc. ), magnetic disk storage media or other magnetic storage devices, or any other medium that can be used to carry or store desired program code in the form of instructions or data structures and that can be accessed by a computer, which is not limited thereto. The memory 16 may exist independently and is connected with the processor 15 through a bus. The memory 16 may also be integrated with the processor 15.

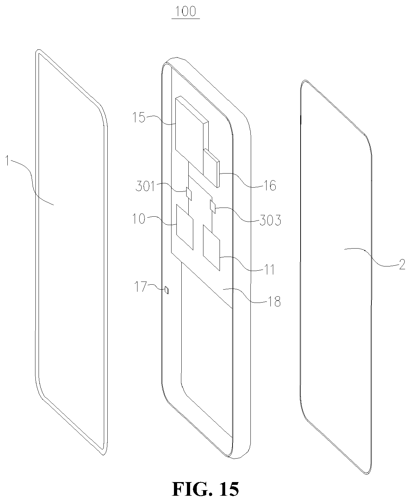

Further, as illustrated in FIG. 15, the electronic device 100 further includes a display screen 1, a housing 2, the first antenna 10, the second antenna 11, the first acquiring unit 301, the second acquiring unit 303, and the posture detector 17. The housing 2 of the electronic device 100 includes a middle frame and a back cover. The first antenna 10, the second antenna 11, the first acquiring unit 301, the second acquiring unit 303, and the posture detector 17 are disposed between the display screen 1 and the housing 2.

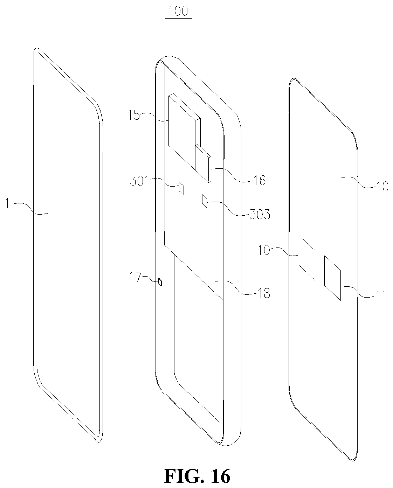

Specifically, the first antenna 10 is spaced apart from the second antenna 11. Optionally, the first antenna 10 and the second antenna 11 are disposed at a circuit board 18 of the electronic device 100. The circuit board 18 may be a flexible circuit board. In other implementations, as illustrated in FIG. 16, the first antenna 10 and the second antenna 11 may also be disposed at the housing 2 of the electronic device 100. The first antenna 10 and the second antenna 11 may be disposed at a side of the back cover facing the display screen 1.

The first acquiring unit 301 has one end electrically connected with the first antenna 10 and the second antenna 11 and the other end electrically connected with the processor 15. The processor 15 is configured to control the first acquiring unit 301 to acquire the first phase difference between the electromagnetic wave signal received by the first antenna 10 from the transmitting apparatus 200 (*see* FIG. 13) and the electromagnetic wave signal received by the second antenna 11 when the electronic device 100 is in the first posture.

The second acquiring unit 303 has one end electrically connected with the first antenna 10 and the second antenna 11 and the other end electrically connected with the processor 15. The processor 15 is further configured to control the second acquiring unit 303 to acquire the second phase difference between the electromagnetic wave signal received by the first antenna 10 and the electromagnetic wave signal received by the second antenna 11 when the electronic device 100 is in the second posture.

The electronic device 100 moves from the first posture to the second posture under the drive of the external posture detector 302 (*see* FIG. 12). The posture detector 17 is configured to detect an angle variation when the electronic device 100 moves from the first posture to the second posture. Optionally, the posture detector 17 is a gyroscope.

The electronic device 100 provided in the implementations of the disclosure has a function of determining the AOA, and can realize accurate positioning. In addition, since only the first antenna 10 and the second antenna 11 are needed in the electronic device 100, there are a relatively small number of antenna, which facilitates the miniaturization of the electronic device 100 and the simplification of layout design of internal members of the electronic device 100.

It is noted that, a person of ordinary skill in the art may further make improvements and modifications without departing from the principle of the disclosure, and these improvements and modifications shall also belong to the scope of protection of the disclosure.

**Claims**

1. A method for determining an angle-of-arrival (AOA), applied to an electronic device comprising a first antenna and a second antenna, and the method comprising:

   acquiring a first phase difference between an electromagnetic wave signal received by the first antenna from a transmitting apparatus and the electromagnetic wave signal received by the second antenna from the transmitting apparatus when the electronic device is in a first posture; acquiring a target angle variation, wherein the target angle variation is an angle variation of the electronic device in a second posture relative to the electronic device in the first posture; acquiring a second phase difference between the electromagnetic wave signal received by the first antenna and the electromagnetic wave signal received by the second antenna when the electronic device is in the second posture; and determining, according to the target angle variation, the first phase difference, and the second phase difference, an AOA of the electromagnetic wave signal received when the electronic device is in the first posture.

2. The method of claim 1, wherein the target angle variation is the angle variation of the electronic device in the second posture relative to the electronic device in the first posture, and acquiring the target angle variation comprises:

   moving, by the electronic device, from the first posture to a first sub-posture in a first target direction to enable an angle variation of the electronic device in the first target direction to be a first target angle sub-variation; and

moving, by the electronic device, from the first posture to a second sub-posture in a second target direction to enable an angle variation of the electronic device in the second target direction to be a second target angle sub-variation; wherein the first target direction is different from the second target direction, the first sub-posture is a component of the second posture in the first target direction and the second sub-posture is a component of the second posture in the second target direction, and the first target angle sub-variation and the second target angle sub-variation form the target angle variation.

3. The method of claim 2, wherein the first target direction is perpendicular to the second target direction.

4. The method of claim 2, wherein acquiring the second phase difference between the electromagnetic wave signal received by the first antenna and the electromagnetic wave signal received by the second antenna when the electronic device is in the second posture comprises:

acquiring a first phase sub-difference between the electromagnetic wave signal received by the first antenna and the electromagnetic wave signal received by the second antenna when the angle variation of the electronic device in the first target direction is the first target angle sub-variation;

acquiring a second phase sub-difference between the electromagnetic wave signal received by the first antenna and the electromagnetic wave signal received by the second antenna when the angle variation of the electronic device in the second target direction is the second target angle sub-variation; and

the first phase sub-difference and the second phase sub-difference form the second phase difference.

5. The method of claim 4, wherein the first target direction is an azimuth direction, the second target direction is a pitch direction, and determining, according to the target angle variation, the first phase difference, and the second phase difference, the AOA of the electromagnetic wave signal received when the electronic device is in the first posture, comprises:

determining, according to the first target angle sub-variation, the first phase difference, and the first phase sub-difference, an azimuth angle of the AOA of the electromagnetic wave signal received when the electronic device is in the first posture;

determining, according to the second target angle sub-variation, the first phase difference, and the second phase sub-difference, a pitch angle of the AOA of the electromagnetic wave signal received when the electronic device is in the first posture; and

wherein the azimuth angle and the pitch angle form the AOA.

6. The method of claim 5, wherein

determining, according to the first target angle sub-variation, the first phase difference, and the first phase sub-difference, the azimuth angle of the AOA of the electromagnetic wave signal received when the electronic device is in the first posture comprises:

determining a difference value between the first phase difference and the first phase sub-difference as a first difference value, and determining a first-phase-difference slope according to a ratio of the first difference value to the first target angle sub-variation; and

determining, according to the first-phase-difference slope and the first phase difference, the azimuth angle of the AOA of the electromagnetic wave signal received when the electronic device is in the first posture; and

determining, according to the second target angle sub-variation, the first phase difference, and the second phase sub-difference, the pitch angle of the AOA of the electromagnetic wave signal received when the electronic device is in the first posture comprises:

determining a difference value between the first phase difference and the second phase sub-difference as a second difference value, and determining a second-phase-difference slope according to a ratio of the second difference value to the second target angle sub-variation; and

determining, according to the second-phase-difference slope and the first phase difference, the pitch angle of the AOA of the electromagnetic wave signal received when the electronic device is in the first posture.

7. The method of claim 6, wherein

determining, according to the first-phase-difference slope and the first phase difference, the azimuth angle of the AOA of the electromagnetic wave signal received when the electronic device is in the first posture comprises:

calculating the azimuth angle according to formula (1) of the first-phase-difference slope and the first phase difference, wherein the formula (1) is:

$$\theta = \operatorname{atan}(PD_1/PD_{1\text{-}K})$$

wherein $\theta$ represents the azimuth angle, $PD_1$ represents the first phase difference, and $PD_{1\text{-}K}$ represents the first-phase-difference slope; and

determining, according to the second-phase-difference slope and the first phase difference, the pitch angle of the AOA of the electromagnetic wave signal received when the electronic device is in the first posture comprises:

calculating the pitch angle according to formula (2) of the second-phase-difference slope and the first phase difference, wherein the formula (2) is:

$$\varphi = -\operatorname{atan}(PD_{2\text{-}K}/PD_1)$$

wherein $\varphi$ represents the pitch angle, $PD_{2\text{-}K}$ represents the second-phase-difference slope, and $PD_1$ represents the first phase difference.

8. The method of claim 7, wherein the first target direction is a pitch direction, the second target direction is an azimuth direction, and determining, according to the target angle variation, the first phase difference, and the second phase difference, the AOA of the electromagnetic wave signal received when the electronic device is in the first posture comprises:

determining, according to the first target angle sub-variation, the first phase difference, and the first phase sub-difference, the pitch angle of the AOA of the electromagnetic wave signal received when the electronic device is in the first posture;
determining, according to the second target angle sub-variation, the first phase difference, and the second phase sub-difference, the azimuth angle of the AOA of the electromagnetic wave signal received when the electronic device is in the first posture; and
wherein the azimuth angle and the pitch angle form the AOA.

9. The method of any one of claims 1 to 8, wherein acquiring the first phase difference between the electromagnetic wave signal received by the first antenna from the transmitting apparatus and the electromagnetic wave signal received by the second antenna from the transmitting apparatus when the electronic device is in the first posture, comprises:

detecting a phase of the electromagnetic wave signal received by the first antenna from the transmitting apparatus when the electronic device is in the first posture;
detecting a phase of the electromagnetic wave signal received by the second antenna from the transmitting apparatus when the electronic device is in the first posture; and
calculating the first phase difference between the electromagnetic wave signal received by the second antenna from the transmitting apparatus and the electromagnetic wave signal received by the first antenna from the transmitting apparatus.

10. The method of any one of claims 2 to 8, wherein

moving, by the electronic device, from the first posture to the first sub-posture in the first target direction comprises: rotating, by the electronic device, from the first posture to the first sub-posture in the first target direction; and
moving, by the electronic device, from the first posture to the second sub-posture in the second target direction comprises: rotating, by the electronic device, from the first posture to the second sub-posture in the second target direction.

11. The method of any one of claims 2 to 8, wherein an absolute value of the first target angle sub-variation is less than or equal to 5 degrees, and an absolute value of the second target angle sub-variation is less than or equal to 5 degrees.

12. The method of any one of claims 1 to 8, wherein prior to determining, according to the target angle variation, the first phase difference, and the second phase difference, the AOA of the electromagnetic wave signal received when the electronic device is in the first posture, the method further comprises:
establishing a preset mapping relationship between azimuth angles of AOAs and pitch angles of the AOAs, wherein the preset mapping relationship indicates a one-to-one correspondence between the azimuth angles and the pitch angles when the first phase difference is a target phase difference.

13. The method of claim 12, wherein determining, according to the target angle variation, the first phase difference, and the second phase difference, the AOA of the electromagnetic wave signal received when the electronic device is in the first posture comprises:

determining a first target angle according to the target angle variation, the first phase difference, and the second phase difference;

determining a second target angle according to the first target angle and the preset mapping relationship, wherein the first target angle and the second target angle form the AOA of the electromagnetic wave signal received when the electronic device is in the first posture; and wherein the first target angle is the azimuth angle and the second target angle is the pitch angle; or the first target angle is the pitch angle and the second target angle is the azimuth angle.

14. An apparatus for determining an angle-of-arrival (AOA), comprising:

a first acquiring unit configured to acquire a first phase difference between an electromagnetic wave signal received by a first antenna from a transmitting apparatus and the electromagnetic wave signal received by a second antenna from the transmitting apparatus when an electronic device is in a first posture;

a posture detector configured to acquire a target angle variation, wherein the target angle variation is an angle variation of the electronic device in a second posture relative to the electronic device in the first posture;

a second acquiring unit configured to acquire a second phase difference between the electromagnetic wave signal received by the first antenna and the electromagnetic wave signal received by the second antenna when the electronic device is in the second posture; and

a processing unit configured to determine, according to the target angle variation, the first phase difference, and the second phase difference, an AOA of the electromagnetic wave signal received when the electronic device is in the first posture.

15. A storage medium storing a computer program which, when executed by a processor, causes the processor to carry out the method of any one of claims 1 to 13.

16. An electronic device, comprising a processor, a memory, and one or more programs stored in the memory and configured to be executed by the processor, wherein the one or more programs comprise instructions for executing the method of any one of claims 1 to 13.

17. The electronic device of claim 16, further comprising:

the first antenna;
the second antenna spaced apart from the first antenna;
a first acquiring unit electrically connected with the processor;
a posture detector configured to detect an angle variation of the electronic device; and
a second acquiring unit electrically connected with the processor.

18. The electronic device of claim 16 or 17, further comprising a housing, wherein the first antenna and the second antenna are received in the housing.

19. The electronic device of claim 16 or 17, further comprising a circuit board, wherein the first antenna and the second antenna are disposed at the circuit board.

20. A communication system, comprising the electronic device of any one of claims 16 to 19 and a transmitting apparatus, wherein the transmitting apparatus is configured to transmit an electromagnetic wave signal to the first antenna and the second antenna.

ACQUIRE A FIRST PHASE DIFFERENCE BETWEEN AN ELECTROMAGNETIC WAVE SIGNAL RECEIVED BY THE FIRST ANTENNA FROM A TRANSMITTING APPARATUS AND THE ELECTROMAGNETIC WAVE SIGNAL RECEIVED BY THE SECOND ANTENNA FROM THE TRANSMITTING APPARATUS WHEN THE ELECTRONIC DEVICE IS IN A FIRST POSTURE — 101

ACQUIRE A TARGET ANGLE VARIATION, WHERE THE TARGET ANGLE VARIATION IS AN ANGLE VARIATION OF THE ELECTRONIC DEVICE IN A SECOND POSTURE RELATIVE TO THE ELECTRONIC DEVICE IN THE FIRST POSTURE — 102

ACQUIRE A SECOND PHASE DIFFERENCE BETWEEN THE ELECTROMAGNETIC WAVE SIGNAL RECEIVED BY THE FIRST ANTENNA AND THE ELECTROMAGNETIC WAVE SIGNAL RECEIVED BY THE SECOND ANTENNA WHEN THE ELECTRONIC DEVICE IS IN THE SECOND POSTURE — 103

DETERMINE, ACCORDING TO THE TARGET ANGLE VARIATION, THE FIRST PHASE DIFFERENCE, AND THE SECOND PHASE DIFFERENCE, AN AOA OF THE ELECTROMAGNETIC WAVE SIGNAL RECEIVED WHEN THE ELECTRONIC DEVICE IS IN THE FIRST POSTURE — 104

**FIG. 1**

100

**FIG. 2**

100

**FIG. 3**

DETECT A PHASE OF THE ELECTROMAGNETIC WAVE SIGNAL RECEIVED BY THE FIRST ANTENNA FROM THE TRANSMITTING APPARATUS WHEN THE ELECTRONIC DEVICE IS IN THE FIRST POSTURE / 110

DETECT A PHASE OF THE ELECTROMAGNETIC WAVE SIGNAL RECEIVED BY THE SECOND ANTENNA FROM THE TRANSMITTING APPARATUS WHEN THE ELECTRONIC DEVICE IS IN THE FIRST POSTURE / 111

CALCULATE A FIRST PHASE DIFFERENCE BETWEEN THE ELECTROMAGNETIC WAVE SIGNAL RECEIVED BY THE SECOND ANTENNA FROM THE TRANSMITTING APPARATUS AND THE ELECTROMAGNETIC WAVE SIGNAL RECEIVED BY THE FIRST ANTENNA FROM THE TRANSMITTING APPARATUS / 112

**FIG. 4**

THE ELECTRONIC DEVICE MOVES FROM THE FIRST POSTURE TO A FIRST SUB-POSTURE IN A FIRST TARGET DIRECTION TO ENABLE AN ANGLE VARIATION OF THE ELECTRONIC DEVICE IN THE FIRST TARGET DIRECTION TO BE A FIRST TARGET ANGLE SUB-VARIATION / 120

THE ELECTRONIC DEVICE MOVES FROM THE FIRST POSTURE TO A SECOND SUB-POSTURE IN A SECOND TARGET DIRECTION TO ENABLE AN ANGLE VARIATION OF THE ELECTRONIC DEVICE IN THE SECOND TARGET DIRECTION TO BE A SECOND TARGET ANGLE SUB-VARIATION / 121

**FIG. 5**

FIRST SUB-POSTURE          SECOND SUB-POSTURE

FIRST POSTURE

**FIG. 6**

ACQUIRE A FIRST PHASE SUB-DIFFERENCE BETWEEN THE ELECTROMAGNETIC WAVE SIGNAL RECEIVED BY THE FIRST ANTENNA AND THE ELECTROMAGNETIC WAVE SIGNAL RECEIVED BY THE SECOND ANTENNA WHEN THE ANGLE VARIATION OF THE ELECTRONIC DEVICE IN THE FIRST TARGET DIRECTION IS THE FIRST TARGET ANGLE SUB-VARIATION /130

ACQUIRE A SECOND PHASE SUB-DIFFERENCE BETWEEN THE ELECTROMAGNETIC WAVE SIGNAL RECEIVED BY THE FIRST ANTENNA AND THE ELECTROMAGNETIC WAVE SIGNAL RECEIVED BY THE SECOND ANTENNA WHEN THE ANGLE VARIATION OF THE ELECTRONIC DEVICE IN THE SECOND TARGET DIRECTION IS THE SECOND TARGET ANGLE SUB-VARIATION /131

**FIG. 7**

DETERMINE, ACCORDING TO THE FIRST TARGET ANGLE SUB-VARIATION, THE FIRST PHASE DIFFERENCE, AND THE FIRST PHASE SUB-DIFFERENCE, THE AZIMUTH ANGLE OF THE AOA OF THE ELECTROMAGNETIC WAVE SIGNAL RECEIVED WHEN THE ELECTRONIC DEVICE IS IN THE FIRST POSTURE /140

DETERMINE, ACCORDING TO THE SECOND TARGET ANGLE SUB-VARIATION, THE FIRST PHASE DIFFERENCE, AND THE SECOND PHASE SUB-DIFFERENCE, THE PITCH ANGLE OF THE AOA OF THE ELECTROMAGNETIC WAVE SIGNAL RECEIVED WHEN THE ELECTRONIC DEVICE IS IN THE FIRST POSTURE /141

**FIG. 8**

DETERMINE A DIFFERENCE VALUE BETWEEN THE FIRST PHASE DIFFERENCE AND THE FIRST PHASE SUB-DIFFERENCE AS A FIRST DIFFERENCE VALUE, AND DETERMINE A FIRST-PHASE-DIFFERENCE SLOPE ACCORDING TO A RATIO OF THE FIRST DIFFERENCE VALUE TO THE FIRST TARGET ANGLE SUB-VARIATION | 1400

DETERMINE, ACCORDING TO THE FIRST-PHASE-DIFFERENCE SLOPE AND THE FIRST PHASE DIFFERENCE, THE AZIMUTH ANGLE OF THE AOA OF THE ELECTROMAGNETIC WAVE SIGNAL RECEIVED WHEN THE ELECTRONIC DEVICE IS IN THE FIRST POSTURE | 1401

**FIG. 9**

DETERMINE A DIFFERENCE VALUE BETWEEN THE FIRST PHASE DIFFERENCE AND THE SECOND PHASE SUB-DIFFERENCE AS A SECOND DIFFERENCE VALUE, AND DETERMINE A SECOND-PHASE-DIFFERENCE SLOPE ACCORDING TO A RATIO OF THE SECOND DIFFERENCE VALUE TO THE SECOND TARGET ANGLE SUB-VARIATION | 1410

DETERMINE, ACCORDING TO THE SECOND-PHASE-DIFFERENCE SLOPE AND THE FIRST PHASE DIFFERENCE, THE PITCH ANGLE OF THE AOA OF THE ELECTROMAGNETIC WAVE SIGNAL RECEIVED WHEN THE ELECTRONIC DEVICE IS IN THE FIRST POSTURE | 1411

**FIG. 10**

ACQUIRE A FIRST PHASE DIFFERENCE BETWEEN AN ELECTROMAGNETIC WAVE SIGNAL RECEIVED BY THE FIRST ANTENNA FROM A TRANSMITTING APPARATUS AND THE ELECTROMAGNETIC WAVE SIGNAL RECEIVED BY THE SECOND ANTENNA FROM THE TRANSMITTING APPARATUS WHEN THE ELECTRONIC DEVICE IS IN A FIRST POSTURE — 201

ACQUIRE A TARGET ANGLE VARIATION, WHERE TARGET ANGLE VARIATION IS AN ANGLE VARIATION OF THE ELECTRONIC DEVICE IN A SECOND POSTURE RELATIVE TO THE ELECTRONIC DEVICE IN THE FIRST POSTURE — 202

ACQUIRE A SECOND PHASE DIFFERENCE BETWEEN THE ELECTROMAGNETIC WAVE SIGNAL RECEIVED BY THE FIRST ANTENNA AND THE ELECTROMAGNETIC WAVE SIGNAL RECEIVED BY THE SECOND ANTENNA WHEN THE ELECTRONIC DEVICE IS IN THE SECOND POSTURE — 203

ESTABLISH A PRESET MAPPING RELATIONSHIP BETWEEN AZIMUTH ANGLES OF AOAS AND PITCH ANGLES OF THE AOAS, WHERE THE PRESET MAPPING RELATIONSHIP INDICATES A ONE-TO-ONE CORRESPONDENCE BETWEEN THE AZIMUTH ANGLES AND THE PITCH ANGLES WHEN THE FIRST PHASE DIFFERENCE IS A TARGET PHASE DIFFERENCE — 204

DETERMINE A FIRST TARGET ANGLE ACCORDING TO THE TARGET ANGLE VARIATION, THE FIRST PHASE DIFFERENCE, AND THE SECOND PHASE DIFFERENCE; AND DETERMINE A SECOND TARGET ANGLE ACCORDING TO THE FIRST TARGET ANGLE AND THE PRESET MAPPING RELATIONSHIP, WHERE THE FIRST TARGET ANGLE AND THE SECOND TARGET ANGLE FORM THE AOA OF THE ELECTROMAGNETIC WAVE SIGNAL RECEIVED WHEN THE ELECTRONIC DEVICE IS IN THE FIRST POSTURE — 205

**FIG. 11**

| FIRST ACQUIRING UNIT | POSTURE DETECTOR | SECOND ACQUIRING UNIT | PROCESSING UNIT |

FIG. 12

1000

200

100

FIG. 13

100

15

1

16

2

**FIG. 14**

**FIG. 15**

100

15

301

1

16

303

10

10

17

18

11

**FIG. 16**

## INTERNATIONAL SEARCH REPORT

| International application No. |
| --- |
| **PCT/CN2021/122262** |

**A. CLASSIFICATION OF SUBJECT MATTER**

G01S 3/46(2006.01)i

According to International Patent Classification (IPC) or to both national classification and IPC

**B. FIELDS SEARCHED**

Minimum documentation searched (classification system followed by classification symbols)

G01S 3

Documentation searched other than minimum documentation to the extent that such documents are included in the fields searched

Electronic data base consulted during the international search (name of data base and, where practicable, search terms used)

CNABS, CNTXT, WPABSC, EPTXTC; 电磁波, 无线, 信号, 到达角, 双, 两个, 天线, 相位差, 姿态, 旋转, 移动, 转动, 角度, electromagnetic, wave, wireless, signal?, antenna, direction, arriv+, mov+, motion

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112684406 A (GUANGDONG OPPO MOBILE TELECOMMUNICATIONS CORP., LTD.) 20 April 2021 (2021-04-20) <br> claims 1-17, description paragraphs 0003-0133, figures 1-16 | 1-20 |
| X | CN 112041700 A (APPLE INC.) 04 December 2020 (2020-12-04) <br> description paragraphs 0028-0049, 0070-0113, figures 1-16 | 1-20 |
| A | CN 110857973 A (HUAWEI TECHNOLOGIES CO., LTD.) 03 March 2020 (2020-03-03) <br> entire document | 1-20 |
| A | CN 102193080 A (SAMSUNG ELECTRONICS CO., LTD.) 21 September 2011 (2011-09-21) <br> entire document | 1-20 |
| A | CN 107810426 A (SONY MOBILE COMMUNICATIONS INC.) 16 March 2018 (2018-03-16) <br> entire document | 1-20 |
| A | US 2016033616 A1 (HEWLETT PACKARD DEVELOPMENT CO.) 04 February 2016 (2016-02-04) <br> entire document | 1-20 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 December 2021** | **04 January 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/122262** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2008100502 A1 (NOKIA CORP.) 01 May 2008 (2008-05-01)<br>        entire document | 1-20 |

Form PCT/ISA/210 (second sheet) (January 2015)

## INTERNATIONAL SEARCH REPORT
### Information on patent family members

| International application No. |
|---|
| **PCT/CN2021/122262** |

| Patent document cited in search report | | | Publication date (day/month/year) | Patent family member(s) | | | Publication date (day/month/year) |
|---|---|---|---|---|---|---|---|
| CN | 112684406 | A | 20 April 2021 | None | | | |
| CN | 112041700 | A | 04 December 2020 | EP | 3756031 | A1 | 30 December 2020 |
| | | | | KR | 20200135452 | A | 02 December 2020 |
| | | | | US | 2019317177 | A1 | 17 October 2019 |
| | | | | WO | 2019204168 | A1 | 24 October 2019 |
| | | | | WO | 2019204168 | A8 | 22 October 2020 |
| | | | | AU | 2020102428 | A4 | 05 November 2020 |
| | | | | IN | 202017041737 | A | 22 January 2021 |
| | | | | AU | 2020102428 | B4 | 03 June 2021 |
| | | | | AU | 2021103816 | A4 | 19 August 2021 |
| CN | 110857973 | A | 03 March 2020 | US | 2020068523 | A1 | 27 February 2020 |
| | | | | US | 10917870 | B2 | 09 February 2021 |
| | | | | EP | 3614165 | A1 | 26 February 2020 |
| | | | | EP | 3614165 | B1 | 15 December 2021 |
| | | | | CN | 110857973 | B | 26 November 2021 |
| CN | 102193080 | A | 21 September 2011 | JP | 2011169895 | A | 01 September 2011 |
| | | | | EP | 2362236 | A1 | 31 August 2011 |
| | | | | KR | 20110094857 | A | 24 August 2011 |
| | | | | US | 2011199263 | A1 | 18 August 2011 |
| CN | 107810426 | A | 16 March 2018 | WO | 2016207932 | A1 | 29 December 2016 |
| | | | | EP | 3311184 | A1 | 25 April 2018 |
| | | | | US | 2016370450 | A1 | 22 December 2016 |
| US | 2016033616 | A1 | 04 February 2016 | WO | 2014168636 | A1 | 16 October 2014 |
| | | | | CN | 105247934 | A | 13 January 2016 |
| | | | | US | 2018067189 | A1 | 08 March 2018 |
| | | | | US | 10254381 | B2 | 09 April 2019 |
| | | | | US | 9841493 | B2 | 12 December 2017 |
| | | | | EP | 2984882 | A1 | 17 February 2016 |
| | | | | EP | 2984882 | A4 | 09 November 2016 |
| US | 2008100502 | A1 | 01 May 2008 | GB | 0620187 | D0 | 22 November 2006 |
| | | | | GB | 2445384 | A | 09 July 2008 |

Form PCT/ISA/210 (patent family annex) (January 2015)